# EUROPÄISCHE PATENTSCHRIFT

(11) **EP 1 114 987 B1**
(45) Veröffentlichungstag und Bekanntmachung des Hinweises auf die Patenterteilung: **14.04.2004**
(21) Anmeldenummer: 00126274.0
(22) Anmeldetag: 01.12.2000
(51) Int. Cl.: G01L 7/08

(54) **Membrane für Druckmessgeräte**
Diaphragm for pressure transducers
Diaphragme pour capteurs de pression

(30) Priorität: 08.01.2000 CH 20000028
(43) Veröffentlichungstag der Anmeldung: 11.07.2001
(73) Patentinhaber: Armaturenbau GmbH, 46487 Wesel-Ginderich (DE)
(72) Erfinder: Hirko, Ferenc, Dipl.-Ing. TU/STV, 3013 Bern (CH)
(74) Vertreter: Ackmann, Günther, Dr.-Ing.

(56) Entgegenhaltungen:
- US-A- 4 241 325

## Beschreibung

Die Erfindung betrifft eine Membran aus einem wenig verformbaren Material, insbesondere zur Erfassung von Druck, Differenz-, Absolut- und/oder Relativdruck, mit einer geprägten Membranstruktur.

Membranen zur Erfassung von Druck, Differenz-, Absolut- und/oder Relativdruck sind seit vielen Jahren im Einsatz, wobei in der Regel sinus-, torid-, säge- oder kegelförmige Profile verwendet werden. Die zur Zeit eingesetzten Membrangeometrien arbeiten bei gleichem Durchmesser und Werkstoff, gleicher Stoffdicke sowie in einem gleichen Druck- und Temperaturbereich mit einem Linearitätsfehler von über 0,5 %. Auf Grund des Linearitätsfehlers müssen somit größere Fehlertoleranzen in den jeweils vorgesehenen Druckbereichen berücksichtigt werden und können zu erheblichen Messfehlern führen. Ursachen für den Linearitätsfehler liegen hierbei in den auftretenden Tangential- und Radialspannungen sowie einer eingeschränkten Verformbarkeit der Membran. Vorzugsweise werden für niedrige und hohe Druckwerte Metallmembranen eingesetzt, sodass die Elastizität der Membran im hohen Maße von der gewählten Geometrie abhängig ist und zu einem erhöhten Linearitätsfehler führen kann.

US-A-4 241 325 beschreibt eine Membran, bei welcher der aktive Membranbereich durch die zwischen den eingespannten Randbereich befindliche Membranfläche bestimmt ist und zumindest eine zum Zentrum hin abgesetzte, ebene und zentrisch angeordnete Messfläche aufweist.

Die zum Zentrum hin abgesetzte Membranfläche trägt wesentlich dazu bei, dass der Linearitätsfehler verringert werden kann, weil eine gleichmäßige Belastung der Membran eintritt und auf Grund des entstehenden harmonischen Schwingungsverhalten die Eigenelastizität zur Reduzierung des Linearitätsfehlers beiträgt. In einer bevorzugten Ausführungsform der Membran ist diese kreisrund ausgebildet und weist zumindest eine ringförmige Trapezfläche auf.

Der Erfindung liegt die Aufgabe zugrunde, eine neuartige Membran aufzuzeigen, welche eine verbesserte Temperaturkompensation und einen geringeren Linearitätsfehler aufweist.

Erfindungsgemäß ist zur Lösung vorgesehen, dass der äußere Randbereich gegenüber der Membranebene die größte Erhebung aufweist. Damit sind besonders gute Ergebnisse erzielbar, weil eine höhere Elastizität des mittleren Bereichs eintritt.

In weiterer Ausgestaltung der Erfindung ist vorgesehen, dass die zumindest eine abgesetzte Messfläche wenigstens eine 45°-Abschrägung aufweist und/oder dass eine oder mehrere Trapezmembranflächen ausgebildet sind und jeweils beidseitig eine 45°-Abschrägung aufweisen. Durch die erfindungsgemäße Ausgestaltung der Membran mit einer 45°- Abschrägung werden in vorteilhafter Weise die auftretenden Tangential- und Radialspannungen sowie die Tangential- und Radialdehnungen gegeneinander aufgehoben, sodass ein äußerst geringer Linearitätsfehler entsteht. Hieraus ergeben sich im Weiteren die Vorteile, dass der Genauigkeitsbereich des verwendeten Druckmessgeräts wesentlich erhöht werden kann. Hierdurch wird der Vorteil erzielt, dass für die Erfassung von Druck, Differenz-, Absolut- oder Relativdruck im wesentlichen die zum Zentrum hin abgesetzte ebene und zentrische angeordnete Messfläche und die Trapezflächen als aktive Membranfläche zum Einsatz kommen und mögliche Tangential- und Radialspannungen im belasteten oder unbelasteten Zustand vermieden werden. Dadurch, dass die Membran zumindest eine abgesetzte Messfläche und Trapezflächen mit einer 45°-Abschrägung aufweist, wird in vorteilhafter Weise eine wesentliche Verbesserung des Linearitätsfehlers erzielt.

Die erfindungsgemäße Ausführung einer Membran weist gegenüber dem wesentlich verringertem Linearitätsfaktor weitere vorteilhafte Eigenschaften auf. Auf Grund der Geometrie mit einem verringerten Schluckvolumen ist eine wesentlich geringere Füllmenge, beispielsweise mit Öl, notwendig, sodass eine deutlich reduzierte Temperaturabhängigkeit und somit eine verbesserte Temperaturkompensation vorliegt. Die verringerte Füllmenge ergibt sich insbesondere durch die verwendete Geometrie der Membran, weil nur der Bereich zwischen dem Membranbett und der Messfläche bzw. den Trapezflächen aufgefüllt zu werden braucht.

Die geprägten Membranen werden entsprechend ihren jeweiligen Verwendungszweck gegebenenfalls mit einem Rand des Druckmittlers verschweißt, wobei ein Wärmeverzug durch eine ausreichende Wärmeabfuhr vermieden wird. Hierdurch entsteht nach dem Schweißvorgang kein sichtbarer Wärmeverzug und eine Zunahme des Linearitätsfehlers wird auf weniger als 0,005 % begrenzt. Aus diesem Grund arbeitet die Membran im vorgesehenen Druckmessbereich mit einem Linearitätsfehler von < 0,04 %. Erreicht wird dieser geringe Linearitätsfehler dadurch, dass im Zentrum der Membran die Tangential- und Radialspannungen sowie die Tangential- und Radialdehnungen sich gegenseitig aufheben. Hierdurch wird eine Beeinflussung der Linearität weitestgehend vermieden und Linearitätsfehler von < 0,04% gewährleistet.

Als besonders vorteilhaft hat sich im Weiteren gezeigt, dass die Messgenauigkeit der Membran mit einem verringerten Linearitätsfehler durch eine große aktive Membranfläche erzielt wird, wobei die aktive Membranfläche aus der zentrischen Messfläche und den einzelnen ringförmigen Trapezflächen besteht.

In weiterer Ausgestaltung der Erfindung ist vorgesehen, dass der radial außen liegende Trapezübergang den größten Radius aufweist und dieser Radiusbereich am Rand der Membrane wie ein elastisches Gelenk arbeitet, sodass eine nahezu parallele Seitwärtsbewegung der Membranfläche und insbesondere der zentrischen Messfläche zur Membranebene möglich ist. Ferner hat sich in vorteilhafter Weise gezeigt, dass die innenliegenden Trapezübergänge gleiche Radien aufweisen müssen, um auftretende Tangential- und Radialspannungen mit den Tangential- und Radialdehnungen zu kompensieren.

In weiterer Ausgestaltung der Erfindung ist vorgesehen, dass die aktive Membranfläche in oder parallel zur Membranebene liegend ausgebildet sein kann, dass die Trapezfläche wechselweise unterhalb oder oberhalb der Membranebene liegend angeordnet sind oder dass einzelne Trapezflächen in der Membranebene liegend angeordnet sind. Alternativ besteht die Möglichkeit, dass zwischen den versetzt angeordneten Trapezfläche in der Membranebene liegende Membranflächen ausgebildet sind. Durch die unterschiedliche ausgebildeten Trapezflächen besteht die Möglichkeit einzelne Membran für unterschiedliche Anwendungszwecke einzusetzen und eine Optimierung der aktiven Membranfläche, sowie des Linearitätsfehlers vorzunehmen. Die parallel zur oder in der Membranebene liegende Trapezflächen weisen hierbei annähernd identische Breiten auf. Durch die Vielzahl der ringförmigen Trapezflächen im Randbereich der Membran und der gleichzeitig relativ groß ausgebildeten, ebenen Messfläche im Zentrum der Membran werden somit parallele Schwingungen gegenüber der Membranebene ermöglicht, wodurch der Linearitätsfehler gering gehalten werden kann.

Für spezielle Anwendungsfälle kann es auch von Vorteil sein, wenn einzelne Trapezflächen geneigt zur Membranebene angeordnet sind, um somit bei besondern Konstruktionen des Membranbettes bzw. Manometers eine weitere Optimierung zu ermöglichen.

In weiterer Ausgestaltung der Erfindung ist vorgesehen, dass die aktive Messfläche mindestens 20 % des aktiven Membrandurchmessers umfasst, während der außenliegende Randbereich 2 bis 10 % des aktiven Membrandurchmessers beträgt. Die einzelnen ringförmig ausgebildeten Trapezflächen weisen hierbei gegenüber dem äußeren Randbereich die 1,0 bis 2,5-fache Breite auf, was sich als besonders vorteilhaft erwiesen hat. Der Randbereich der Membran weist die größtmögliche Erhebung gegenüber der Membranebene auf, sodass in Zusammenwirkung mit dem größer gewählten Radius zwischen erster 45°-Abschrägung und dem Randbereich die Ausbildung eines elastischen Gelenks verstärkt wird. Für die Stabilität zum Zentrum hin sorgt das abgesetzte 45°-Trapezprofil mit den kleineren, gleichbleibenden Radien. Die Anzahl der Trapezprofile ist in erster Linie vom Membrandurchmesser und von der Dicke des Membranmaterials abhängig.

In einer weiteren Ausgestaltung der Erfindung ist vorgesehen, dass zwei mechanische oder elektronisch gekoppelte Membranen zur Druckmessung eingesetzt werden, wobei die Trapezflächen zweier verwendeter Membran symmetrisch oder asymmetrisch angeordnet sein können. Die Membran werden hierbei getrennt als Messglied für zwei Druckkammern eingesetzt und können miteinander gekoppelt sein.

Um eine Zunahme des Linearitätsfehlers nach dem Prägen der Membran zu verringern wird in weiterer Ausgestaltung der Erfindung vorgeschlagen, dass die Membran nach dem Prägevorgang einer spannungsreduzierenden Behandlung unterzogen wird.

Bevorzugt wird eine erfindungsgemäße Membran aus Metall, beispielsweise rostfreiem Chrom- Nickelstahl, hergestellt, um eine hohe Standzeit zu gewährleisten. Hierdurch zeichnen sich die erfindungsgemäßen Membranen bevorzugt zur Anwendung bei Druckmessumformer oder Druckmittlern aus.

Die thermische Belastung des Materials kann zu mechanischen Spannungen, zwischen der gerade geschweißten und der gegenüberliegenden Schweißstelle führen, sodass ein antisymmetrisches Spannungsfeld entsteht. Hierdurch erfährt die Membran nach dem Schweißen eine durch Ihre Geometrie bedingte antisymmetrische Deformation, wodurch die tangentiale Beweglichkeit und somit auch der lineare Arbeitsbereich der Membrane eingeschränkt wird. Bei der erfindungsgemäßen 45°-Trapezmembrane zeigt sich im Gegensatz zu allen bekannten Membranen von gleichem Durchmesser und Werkstoff, gleicher Stoffdicke sowie in einem gleichem Druck- und Temperaturbereich nach dem Schweißen kein sichtbarer Wärmeverzug. Die Abweichung der Kennlinie der Membran nach dem Schweißen in Bezug auf die Kennlinienabweichung vor dem Schweißen ist daher weniger als 0,005 %, sodass insgesamt keine wesentliche Erhöhung des Linearitätsfehlers eintritt. Aus den vorgenannten Gründen hat sich daher gezeigt, dass die gewählte trapezförmige Membran mit 45°-Abschrägungen für alle notwendigen Druckbereiche bei gleichzeitig geringstem Linearitätsfehler zu einer wesentlichen Verbesserung der Genauigkeit der gemessenen Druckwerte führt.

Die Erfindung wird im Weiteren anhand von Ausführungsbeispielen nochmals erläutert:

Es zeigt
- Fig. 1: eine Teilansicht einer erfindungsgemäßen 45°-Trapezmembran,
- Fig. 2: eine geschnittene Seitenansicht der Trapezmembran gemäß Figur 1,
- Fig. 3: eine Spannungsintensitätsverteilung einer erfindungsgemäßen Membran über den aktiven Durchmesserbereich,
- Fig. 4: eine typische Kennlinienabweichung zwischen zwei Grenzpunkten der erfindungsgemäßen Membran,
- Fig. 5: ein erstes Anwendungsbeispiel der Membran in einem Membran-Druckmittler und
- Fig. 6: ein weiteres Anwendungsbeispiel der Membran in einem Druckmessumformer.

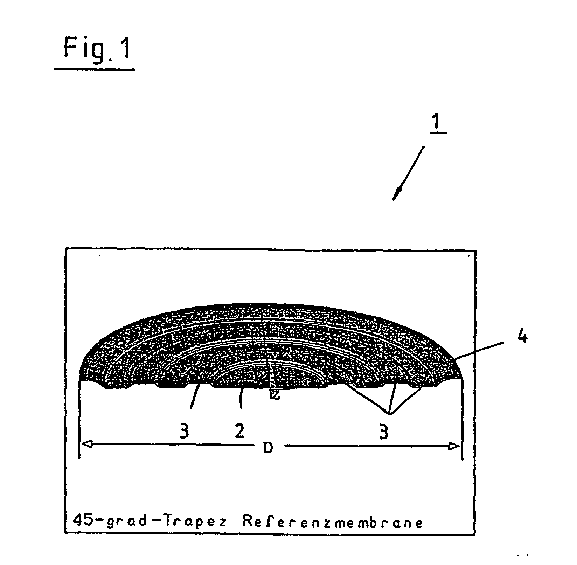

Figur 1 zeigt in einer perspektivischen und halbseitigen Ansicht eine erfindungsgemäße Membran 1, welche eine zentrisch angeordnete Messfläche 2 sowie mehrere ringförmige Trapezflächen 3 und einen erhöhten Randbereich 4 aufweist.

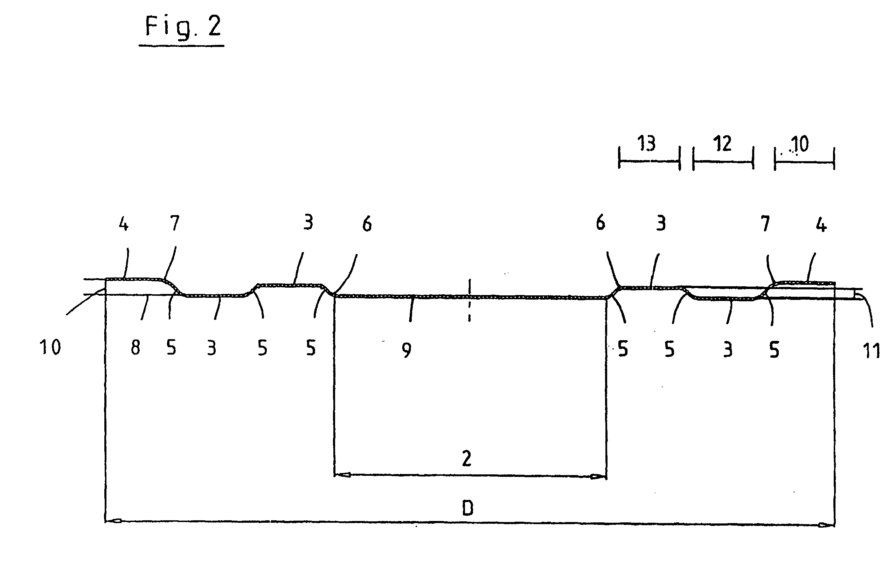

Aus Figur 2 ist im Weiteren in einer geschnittenen Seitenansicht die erfindungsgemäße 45°-Membranstruktur der Membran 1 erkennbar. Zwischen den Trapezflächen 3 und dem Randbereich 4 bzw. der Messfläche 2 sind 45°-Abschrägungen 5 ausgebildet, welche einen Übergang zwischen den Trapezflächen 3, dem Randbereich 4 sowie der Messfläche 2 bilden. Die 45°-Abschrägungen 5 weisen hierbei im Übergang zur Trapezfläche 3 bzw. zur Messfläche 2 einen Radius 6 auf, welcher kleiner ausgebildet ist, wie der Radius 7 im Übergangsbereich zwischen dem äußeren Randbereich 4 und der ersten Abschrägung 5. Der größer ausgebildete Radius 7 arbeitet quasi als elastisches Gelenk, um im Fall der Druckbeaufschlagung der Membran 1 eine parallele Auslenkung der Membranfläche gegenüber der Membranebene 8 zu ermöglichen. Durch die ringförmige Anordnung der Trapezflächen 3 wird ein Membranverhalten erzielt, welches zu einem Ausgleich der Tangential- und Radialspannungen mit den Tangential- und Radialdehnungen führt, sodass ein kleiner Linearitätsfehler von weniger als 0,04 % über den gesamten Druckbereich eintritt. Die Anzahl der Trapezflächen 3 wird hierbei vom maximalen Durchmesser der Membran 1 sowie der Dicke 9 des Membranmaterials bestimmt. Die Breite des linearen Arbeitsbereichs wird auf Grund der erforderlichen Sensibilität der Messfläche festgelegt, wobei die Einstellung der Sensibilität durch Änderungen der äußeren Randerhöhung 10, der Trapezflächenerhöhung 11 und den Radien 6,7 sowie der Trapezflächenbreite 12, 13 erfolgt.

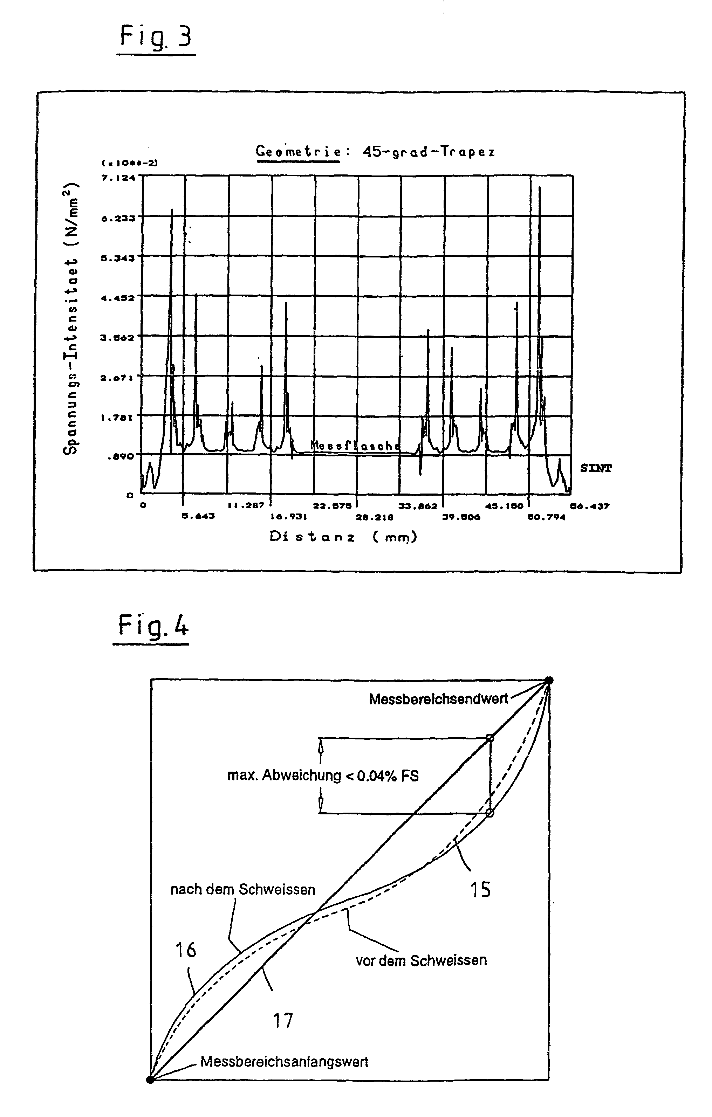

Figur 3 zeigt den Spannungsintensitätsverlauf über den Durchmesser einer erfindungsgemäßen Membran 1, 25. Die Spannungs- und Dehnungsverteilung in der Messfläche der Membrane 1, 25 sind nahezu symmetrisch ausgebildet, sodass die Spannungsintensität in der Messfläche einen Wert kleiner 0,01 N/mm² bei einer Systemdruckempfindlichkeit von P = 100 m bar nicht überschreitet.

Figur 4 zeigt eine typische Kennlinienabweichung zwischen zwei vorgegebenen Messbereichsgrenzen. Die durchgezogene Linie 17 repräsentiert den linear angestrebten Arbeitsbereich, während die dünne durchgezogene Linie 16 sowie die gestrichelte Linie 15 das Verhalten einer reellen Membran 1 nach dem Schweißen bzw. vor dem Schweißen aufzeigt. Die thermische Belastung des Materials der bisher bekannten Membranen führt zu mechanischen Spannungen, sodass zwischen der gerade geschweißten und der gegenüber liegenden Schweißstelle ein antisymmetrisches Spannungsfeld entsteht. Unmittelbare Folge hieraus ist, das die Membran 1 nach dem Schweißen eine durch ihre Geometrie bedingte, antisymmetrische Deformation erfährt, wodurch die tangentiale Beweglichkeit und somit auch der lineare Arbeitsbereich der Membran 1 eingeschränkt wird. Bei einer 45°-Trapezmembran entsteht nach dem Schweißen kein sichtbarer Wärmeverzug, während im Gegensatz zu allen bekannten Membranen bei gleichem Durchmesser und Werkstoff, gleicher Stoffdicke und in einem gleichen Druck- und Temperaturbereich erhebliche Abweichungen zu verzeichnen sind. Die Abweichungen der Kennlinie der Membran 1 nach dem Schweißen in Bezugnahme auf die Kennlinie vor dem Schweißen beträgt weniger als 0,005 %, sodass die maximale Linearitätsabweichung < 0,04 % nicht überschritten wird.

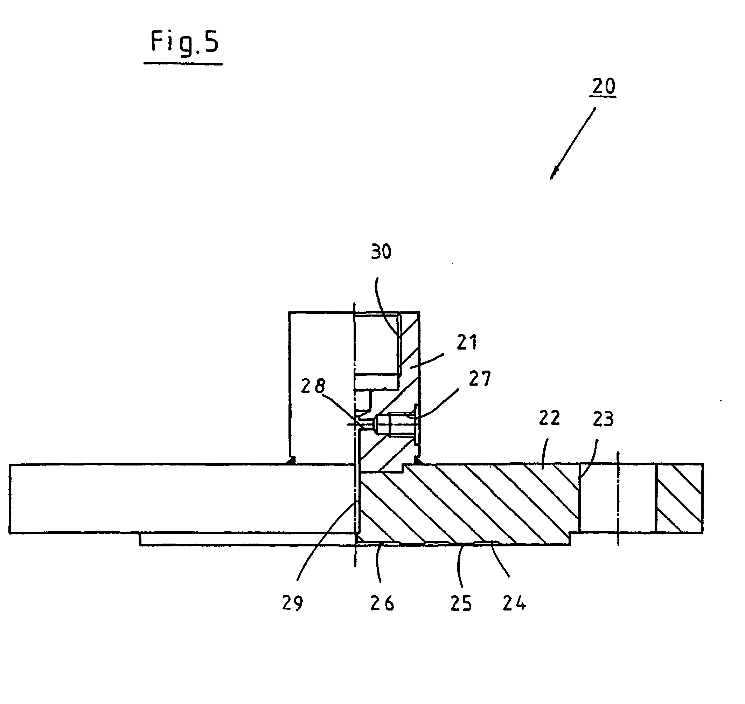

Figur 5 zeigt in einer teilweise geschnittenen Ansicht einen Membran-Druckmittler 20, welcher aus einem Anschweißzapfen 21 und einem Flansch 22 besteht. Anschweißzapfen 21 und Flansch 22 sind im gezeigten Ausführungsbeispiel miteinander verschweißt. Der Flansch 22 weist mehrere umfangsverteilte Befestigungsbohrungen 23 auf, sodass der Membran-Druckmittler 20 entsprechend der jeweiligen Verwendung eingebaut werden kann. Der Membran-Druckmittler 20 kann somit unmittelbar an der Messstelle angeflanscht werden. Auf der dem Anschweißzapfen 21 abgewandten Seite des Flanschs 22 ist ein Membranbett 24 ausgebildet, welches eine der Membran 25 angepasste Kontur aufweist. Zwischen dem Membranbett 24 und der Membran 25 befindet sich in einem Zwischenraum 26 eine Ölfüllung. Die Membran 25 ist normalerweise parallel zum Membranbett 24 angeordnet, und zwar so das ein kaum sichtbarer Spalt zum Membranbett 24 besteht, der den Zwischenraum 26 bildet. Im Falle einer Druckbeaufschlagung durch Über- oder Unterdruck kann somit die Membran 25 zu beiden Seiten ausweichen. Kommt es zur Anlage der Membran 25 an das Membranbett 24 durch einen unzulässigen Überdruck wird die Membran 25 vor einer Beschädigung geschützt. Eine Befüllung des Zwischenraumes 26 erfolgt über eine Füllöffnung 27, welche mit einem nicht dargestellten Gewindeverschlussstopfen abgedichtet werden kann. Von der Füllöffnung 27 erstreckt sich ein Durchbruch 28 zu einem axial verlaufenen Verbindungskanal 29, welcher einerseits in den Zwischenraum 26 und andererseits in den Druckmittelanschluss 30 mündet, an dem elektronische oder mechanische Druckmessgeräte angeschlossen werden können. Die kreisrund ausgebildete Membran wird mit ihrem äußeren Rand unmittelbar mit dem Membranbett 24 totraumfrei verschweißt, sodass eine Befüllung des Zwischenraumes 26 durch die Füllöffnung 27, beispielsweise mit einem Silikonöl, erfolgen kann. Das erste Anwendungsbeispiel der erfindungsgemäßen Membran 25 als Membrandruckmittler 20 in Flanschbauweise eignet sich hervorragend für die Verwendung bei aggressiven, verunreinigten oder heißen Messstoffen. Die Membrangeometrie ist auf alle handelsüblichen Druckmittler-Varianten, insbesondere für Tubuskonstruktionen, und Druckmittler der Nahrungsindustrie übertragbar.

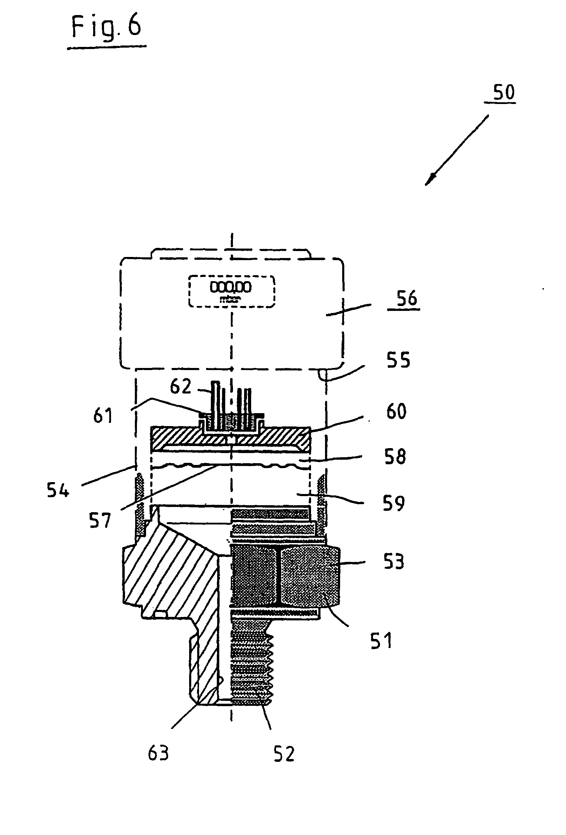

Figur 6 zeigt einen Druckmessumformer 50, bestehend aus einem Sensorgehäuse 51 mit einem Gewindeansatz 52 und einem zur Einschraubung vorgesehenen Sechskantbereich 53. Das Sensorgehäuse 51 ist oberhalb des Sechskantbereichs 53 mit einem hohlwandigen zylindrischen Ansatz 54 ausgestattet, welcher durch einen oberen Abschlussflansch 55 mit aufgesetztem Messgehäuse 56 verschlossen ist. Innerhalb des zylindrischen Ansatzes 54 ist eine erfindungsgemäße Membran 57 querliegend zur Längserstreckung des Druckmessumformers 50 angeordnet. Die Membran 57 unterteilt den zylindrischen Ansatz 54 in einen oberen 58 und unteren Druckbereich 59, wobei die beiden Druckbereiche 58, 59 mit unterschiedlichen Medien gefüllt sein können, welche im Weiteren durch die Membran 57 voneinander getrennt werden. Oberhalb der Membran 57 ist mittels eines Flanschrings 60 ein Sensorelement 61 befestigt, welches im Weiteren zur Weiterleitung der aufgenommenen Messwerte mit dem Messgehäuse 56 und der darin befindlichen Elektronik über Zuleitungen 62 verbunden ist. Der untere Druckraum 59 ist über eine Bohrung 63 mit dem zu messenden Druckmedium verbunden, sodass in Abhängigkeit des vorhandenen Druckes eine Auslenkung der Membran 57 erfolgt, welche wiederum durch das Sensorelement 61 erfasst wird.

### Bezugszeichenliste

- 1: Membran
- 2: Messfläche
- 3: Trapezfläche
- 4: Randbereich
- 5: 45°-Abschrägung
- 6: Radius
- 7: Radius
- 8: Membranebene
- 9: Dicke
- 10: Randerhöhung
- 11: Trapezflächenerhebung
- 12: Trapezflächenbreit
- 13: Trapez
- 15: Linie
- 16: Linie
- 17: Linie
- 20: Membran- Druckmittler
- 21: Anschweißzapfen
- 22: Flansch
- 23: Befestigungsbogen
- 24: Membranbett
- 25: Membran
- 26: Zwischenraum / Druckraum
- 27: Füllöffnung
- 28: Durchbruch
- 29: Verbindungskanal
- 30: Messstoffanschluss
- 50: Druckmessumformer
- 51: Sensorgehäuse
- 52: Gewindeansatz
- 53: Sechskantbereich
- 54: Ansatz
- 55: Abschlussflansch
- 56: Messgehäuse
- 57: Membran
- 58: Druckbereich
- 59: Druckbereich
- 60: Flanschring
- 61: Sensorelement
- 62: Zuleitung
- 63: Bohrung

## Patentansprüche

1. Membran (1, 25, 57) aus einem wenig verformbaren Material, insbesondere zur Erfassung von Druck, Differenz-, Absolut- und/oder Relativdruck, mit einer geprägten Membranstruktur, wobei der aktive Membranbereich durch die zwischen den eingespannten Randbereich befindliche Membranfläche bestimmt ist und zumindest eine zum Zentrum hin abgesetzte, ebene und zentrisch angeordnete Messfläche (2) aufweist,
**dadurch gekennzeichnet,**
**dass** der äußere Randbereich (4) gegenüber der Membranebene (8) die größte Erhebung aufweist.

2. Membran nach Anspruch 1,
**dadurch gekennzeichnet,**
**dass** diese kreisrund ausgebildet ist und zumindest eine ringförmige Trapezfläche (3) aufweist.

3. Membran nach Anspruch 1 oder 2,
**dadurch gekennzeichnet,**
**dass** die zumindest eine abgesetzte Messfläche (2) wenigstens eine 45°-Abschrägung (5) aufweist und/oder dass eine oder mehrere Trapezmembranflächen (3) ausgebildet sind und jeweils beidseitig eine 45° Abschrägung (5) aufweisen.

4. Membran nach Anspruch 2 oder 3,
**dadurch gekennzeichnet,**
**dass** jeder Trapezübergang aus einer 45°-Abschrägung (5) mit abgerundeten Übergängen zur benachbarten Membranfläche besteht.

5. Membran nach einem oder mehreren der Ansprüche 2 bis 4,
**dadurch gekennzeichnet,**
**dass** die aktive Membranfläche aus der Messfläche (2) und den einzelnen ringförmigen Trapezflächen (3) besteht.

6. Membran nach einem oder mehreren der Ansprüche 2 bis 5,
**dadurch gekennzeichnet,**
**dass** der radial außenliegende Trapezübergang den größten Radius (7) aufweist.

7. Membran nach einem oder mehreren der Ansprüche 2 bis 6,
**dadurch gekennzeichnet,**
**dass** die innenliegenden Trapezübergänge gleiche Radien (6) aufweisen.

8. Membran nach einem oder mehreren der Ansprüche 1 bis 7,
**dadurch gekennzeichnet,**
**dass** die aktive Membranfläche in oder parallel zur Membranebene (8) liegend ausgebildet ist.

9. Membran nach einem oder mehreren der Ansprüche 2 bis 8,
**dadurch gekennzeichnet,**
**dass** die Trapezflächen (3) wechselweise unterhalb oder oberhalb der Membranebene (8) liegend angeordnet sind und/oder dass einzelne Trapezflächen (3) in der Membranebene (8) liegend angeordnet sind.

10. Membran nach einem oder mehreren der Ansprüche 2 bis 9,
**dadurch gekennzeichnet,**
**dass** zwischen den versetzt angeordneten Trapezflächen (3) in der Membranebene (8) liegende Membranflächen ausgebildet sind.

11. Membran nach einem oder mehreren der Ansprüche 2 bis 10,
**dadurch gekennzeichnet,**
**dass** die innenliegenden parallel zur oder in der Membranebene (8) liegenden Trapezflächen (3) annähernd identische Breiten aufweisen.

12. Membran nach einem oder mehreren der Ansprüche 2 bis 11,
**dadurch gekennzeichnet,**
**dass** einzelne Trapezflächen (3) geneigt zur Membranebene (8) ausgebildet sind.

13. Membran nach einem oder mehreren der Ansprüche 1 bis 12,
**dadurch gekennzeichnet,**
**dass** die aktive Messfläche (2) mindestens 20% des aktiven Membrandurchmessers umfasst.

14. Membran nach einem oder mehreren der Ansprüche 1 bis 13,
**dadurch gekennzeichnet,**
**dass** der äußere Randbereich (4) 2 bis 10% des aktiven Membrandurchmessers umfasst.

15. Membran nach einem oder mehreren der Ansprüche 2 bis 14,
**dadurch gekennzeichnet,**
**dass** die Breite der Trapezflächen (3) dem 1,0 bis 2,5 fachen des äußeren Randbereiches (4) entsprechen.

16. Membran nach einem oder mehreren der Ansprüche 2 bis 15,
**dadurch gekennzeichnet,**
**dass** die zum Zentrum hin abgesetzte 45°-Trapez-Membran (1, 25, 57) während einer Druckbeaufschlagung annähert parallel zur Membranebene (8) bewegbar ist.

17. Membran nach einem oder mehreren der Ansprüche 1 bis 16,
**dadurch gekennzeichnet,**
**dass** zwei mechanisch oder elektronisch gekoppelte Membranen (1, 25, 57) zur Druckmessung einsetzbar sind.

18. Membran nach Anspruch 17,
**dadurch gekennzeichnet,**
**dass** die Trapezflächen zweier verwendeter Membranen (1, 25, 57) symmetrisch oder asymmetrisch angeordnet sind.

19. Membran nach einem oder mehreren der Ansprüche 1 bis 18,
**dadurch gekennzeichnet,**
**dass** diese aus Metall, beispielsweise rostfreiem Chrom- Nickelstahl, besteht.

20. Membran nach einem oder mehreren der Ansprüche 1 bis 19,
**dadurch gekennzeichnet,**
**dass** nach dem Prägevorgang der Membran (1, 25, 57) eine spannungsreduzierende Behandlung erfolgt.

21. Membran nach einem oder mehreren der Ansprüche 1 bis 20,
**dadurch gekennzeichnet,**
**dass** im Zentrum der Membran (1, 25, 57) die Tangential- und Radialspannung sowie die Tangential- und Radialdehnungen sich gegenseitig aufheben.

## Claims

1. Diaphragm (1, 25, 57), made of little deformable material, in particular for the acquisition of pressure, differential, absolute, and/or relative pressure having a moulded structure and its active area being defined by the diaphragm surface which is contained between the fastened rim areas having at least one plane and centrally arranged measuring surface (2) that is offset towards the centre,
**characterised in that**
the outer area, which is the rim area (4), is the highest elevation compared with the diaphragm plane (8).

2. Diaphragm in accordance with claim 1,
**characterised in that**
the diaphragm is of circular shape and has at least one annular trapezoid surface (3).

3. Diaphragm in accordance with claim 1 or 2,
**characterised in that**
the measuring area (2), which is offset and of which there exists not less than one, has at least one 45° slope (5), and/or **characterised in that** one or several trapezoid diaphragm-surfaces (3) are provided, each with a 45° slope (5) on either side.

4. Diaphragm in accordance with claims 2 or 3,
**characterised in that**
every trapezoid transition consists of a 45° slope (5) with rounded transitions to the adjacent diaphragm surface.

5. Diaphragm in accordance with one or several of claims 2 to 4,
**characterised in that**
the active diaphragm surface consists of the said measuring surface (2) and several annular trapezoid surfaces (3).

6. Diaphragm in accordance with one or several of claims 2 to 5,
**characterised in that**
the radially outer trapezoid transition has the greatest radius (7).

7. Diaphragm in accordance with one or several of claims 2 to 6,
**characterised in that**
the inner trapezoid transitions have equal radii (6).

8. Diaphragm in accordance with one or several of claims 1 to 7,
**characterised in that**
the active diaphragm surface is situated in, or parallel with, the diaphragm plane (8).

9. Diaphragm in accordance with one or several of claims 2 to 8,
**characterised in that**
the trapezoid surfaces (3) are situated altematingly below or above the diaphragm plane (8), and/or **characterised in that** some of the trapezoid surfaces (3) are arranged within the diaphragm plane (8).

10. Diaphragm in accordance with one or several of claims 2 to 9,
**characterised in that**
among the staggered trapezoid surfaces (3), diaphragm surfaces are arranged within the diaphragm plane (8).

11. Diaphragm in accordance with one or several of claims 2 to 10,
**characterised in that**
the inner trapezoid surfaces (3), situated parallel with or within the diaphragm plane, (8) are of nearly identical width.

12. Diaphragm in accordance with one or several of claims 2 to 11,
**characterised in that**
some of the trapezoid surfaces (3) are inclined relative to the diaphragm plane (8).

13. Diaphragm in accordance with one or several of claims 1 to 12,
**characterised in that**
the active measuring surface (2) encompasses at least 20 % of the active diaphragm diameter.

14. Diaphragm in accordance with one or several of claims 1 to 13,
**characterised in that**
the outer rim area (4) encompasses 2 to 10 % of the active diaphragm diameter.

15. Diaphragm in accordance with one or several of claims 2 to 14,
**characterised in that**
the width of the trapezoid surfaces (3) is 1.0 to 2.5 times the size of the outer rim area (4).

16. Diaphragm in accordance with one or several of claims 2 to 15,
**characterised in that**
the 45° trapezoidal diaphragm (1, 25, 57), offset towards the centre, when subjected to pressure, is movable nearly parallel with the diaphragm plane (8).

17. Diaphragm in accordance with one or several of claims 1 to 16,
**characterised in that**
two mechanically or electronically coupled diaphragms (1, 25, 57) can be used for pressure measurement.

18. Diaphragm in accordance with claim 17,
**characterised in that**
the trapezoid surfaces of two employed diaphragms (1, 25, 57) are in a symmetrical or asymmetrical arrangement.

19. Diaphragm in accordance with one or several of claims 1 to 18,
**characterised in that**
said diaphragm being made of metal, for example stainless chrome-nickel steel.

20. Diaphragm in accordance with one or several of claims 1 to 19,
**characterised in that**
the moulding operation of the diaphragm (1, 25, 57) is followed by a stress relieving treatment.

21. Diaphragm in accordance with one or several of claims 1 to 20,
**characterised in that**
the tangential and radial stresses as well as the tangential and radial strains cancel each other out in the centre of the diaphragm (1, 25, 57).

## Revendications

1. Membrane (1, 25, 57) constituée d'un matériau peu déformable, notamment pour l'enregistrement d'une pression, d'une pression différentielle, absolue et/ou relative, présentant une structure de membrane gaufrée, étant précisé que la zone active de la membrane est déterminée par la surface de la membrane située entre la zone marginale encastrée et présentant au moins une surface de mesure (2) étagée vers le centre, plane et centrée,
**caractérisée en ce que** la zone marginale extérieure (4) présente la plus grande surélévation par rapport au plan de la membrane (8).

2. Membrane selon la revendication 1,
**caractérisée en ce que** celle-ci est de forme ronde et présente au moins une surface trapézoïdale (3) annulaire.

3. Membrane selon la revendication 1 ou 2,
**caractérisée en ce que** au moins une surface de mesure (2) étagée présente au moins un chanfrein (5) à 45° et/ou qu'une ou plusieurs surface(s) de membrane trapézoïdale(s) (3) est/sont développée(s) et présente(nt) respectivement des deux côtés un chanfrein à 45°.

4. Membrane selon la revendication 2 ou 3,
**caractérisée en ce que** chaque transition trapézoïdale est constituée d'un chanfrein (5) à 45° avec des transitions arrondies vers la surface adjacente de la membrane.

5. Membrane selon une ou plusieurs des revendications 2 à 4,
**caractérisée en ce que** la surface active de la membrane est constituée de la surface de mesure (2) et des différentes surfaces trapézoïdales (3) annulaires.

6. Membrane selon une ou plusieurs des revendications 2 à 5,
**caractérisée en ce que** la transition trapézoïdale située radialement à l'extérieur présente le plus grand rayon (7).

7. Membrane selon une ou plusieurs des revendications 2 à 6,
**caractérisée en ce que** les transitions trapézoïdales situées à l'intérieur présentent des rayons identiques (6),

8. Membrane selon une ou plusieurs des revendications 1 à 7,
**caractérisée en ce que** la surface active de la membrane est développée à plat dans le plan ou à la parallèle du plan de la membrane (8).

9. Membrane selon une ou plusieurs des revendications 2 à 8,
**caractérisée en ce que** les surfaces trapézoïdales (3) sont disposées à plat en alternance en dessus et au-dessous du plan de la membrane (8) et/ou que certaines surfaces trapézoïdales (3) sont situées à plat dans le plan de la membrane (8).

10. Membrane selon une ou plusieurs des revendications 2 à 9,
**caractérisée en ce que** des surfaces de membrane situées à plat dans le plan de la membrane (8) sont développées entre les surfaces trapézoïdales (3) échelonnées.

11. Membrane selon une ou plusieurs des revendications 2 à 10,
**caractérisée en ce que** les surfaces trapézoïdales (3) situées à l'intérieur à la parallèle ou dans le plan de la membrane (8) présentent des largeurs approximativement identiques.

12. Membrane selon une ou plusieurs des revendications 2 à 11,
**caractérisée en ce que** certaines surfaces trapézoïdales (3) sont développées en pente vers le plan de la membrane (8).

13. Membrane selon une ou plusieurs des revendications 1 à 12,
**caractérisée en ce que** la surface active de mesure (2) couvre au moins 20 % du diamètre actif de la membrane.

14. Membrane selon une ou plusieurs des revendications 1 à 13,
**caractérisée en ce que** la zone marginale extérieure (4) couvre 2 à 10 % du diamètre actif de la membrane.

15. Membrane selon une ou plusieurs des revendications 1 à 14,
**caractérisée en ce que** la largeur des surfaces trapézoïdales (3) correspond à 1,0 jusqu'à 2,5 fois la zone marginale extérieure (4).

16. Membrane selon une ou plusieurs des revendications 2 à 15,
**caractérisée en ce que** la membrane trapézoïdale (1, 25, 57) étagée à 45° vers le centre est mobile, approximativement à la parallèle du plan de la membrane (8) lorsqu'elle est soumise à une pression.

17. Membrane selon une ou plusieurs des revendications 1 à 16,
**caractérisée en ce que** deux membranes (1, 25, 57) accouplées mécaniquement ou électroniquement peuvent être utilisées pour la mesure de pression.

18. Membrane selon la revendication 17,
**caractérisée en ce que** les surfaces trapézoïdales de deux membranes utilisées (1, 25, 57) sont disposées symétriquement ou asymétriquement.

19. Membrane selon une ou plusieurs des revendications 1 à 18,
**caractérisée en ce qu'**elle est en métal, par exemple en acier inoxydable au chrome-nickel.

20. Membrane selon une ou plusieurs des revendications 1 à 19,
**caractérisée en ce qu'**après l'opération de gaufrage de la membrane (1, 25, 57) on procède à un traitement de détente.

21. Membrane selon une ou plusieurs des revendications 1 à 20,
**caractérisée en ce qu'**au centre de la membrane (1, 25, 57) les tensions tangentielle et radiale ainsi que les allongements tangentiel et radial se compensent réciproquement.
